# EUROPEAN PATENT APPLICATION

(11) **EP 4 783 118 A1**
(43) Date of publication of application: **29.07.2026**
(21) Application number: 24867064.8
(22) Date of filing: 18.07.2024
(51) Int. Cl.: G06T 11/80

(54) **PICTURE GENERATION METHOD, CONTENT GENERATION METHOD, AND COMPUTING DEVICE**

(30) Priority: 21.09.2023 CN 202311227659
(71) Applicant: Hangzhou Alibaba International Internet Industry Co., Ltd., Hangzhou, Zhejiang 310052 (CN)
(72) Inventor: LIAN, Guowei, Hangzhou, Zhejiang 311121 (CN); TANG, Jun, Hangzhou, Zhejiang 311121 (CN); REN, Yangchun, Hangzhou, Zhejiang 311121 (CN); HONG, Xin, Hangzhou, Zhejiang 311121 (CN); CAI, Huixiang, Hangzhou, Zhejiang 311121 (CN); CHEN, Yanxu, Hangzhou, Zhejiang 311121 (CN)
(74) Representative: Wu, Ting
(86) International application number: PCT/CN2024/106267
(87) International publication number: WO 2025/060646

(57) **Abstract**

Embodiments of the present application provide an image generation method, a content generation method, and a computing device. The image generation method includes: determining a target promotional object provided by a target user; providing selection prompt information of at least one processing method on a user interface; determining a selected first processing method in response to a method selection operation of the target user; providing selection prompt information of at least one style on the user interface; determining a selected first style in response to a style selection operation of the target user; determining at least one promotional image conforming to the first style generated according to the first processing method based on object information of the target promotional object; and providing image prompt information of the at least one promotional image on the user interface. The technical solutions provided by the embodiments of the present application improve content generation efficiency and reduce content generation costs.

## Description

This application claims priority to Chinese Patent Application No. 202311227659.6, filed with the China National Intellectual Property Administration on September 21, 2023, and entitled "Image Generation Method, Content Generation Method, and Computing Device," the entire content of which is incorporated by reference in this application.

### TECHNICAL FIELD

Embodiments of the present application relate to the technical field of electronics, and in particular, to an image generation method, a content generation method, and a computing device.

### BACKGROUND

In some online systems that provide objects for consumers to perform interaction behaviors, the objects are usually also provided by users, where the users are also object providers. To help improve object conversion rates and the like, object promotion has become a solution.

To perform object promotion, effective and accurate promotional content is required to attract consumers. In traditional methods, promotional content is produced and generated by users, which has low efficiency and high cost.

### SUMMARY

Embodiments of the present application provide an image generation method, a content generation method, and a computing device to solve the technical problems of low efficiency and high cost of promotional content generation in the prior art.

In a first aspect, an embodiment of the present application provides an image generation method, comprising:
determining a target promotional object provided by a target user;
providing selection prompt information of at least one processing method in a user interface;
in response to a method selection operation of the target user, determining a selected first processing method;
providing selection prompt information of at least one style in the user interface;
in response to a style selection operation of the target user, determining a selected first style;
determining at least one promotional image generated according to the first processing method and conforming to the first style based on object information of the target promotional object;
providing image prompt information of the at least one promotional image in the user interface.

Optionally, the object information includes a target image, and the method further comprises: screening, from at least one object image corresponding to the target promotional object, at least one candidate image that meets image requirements corresponding to the first processing method; displaying image prompt information of the at least one candidate image in the user interface; and in response to an image selection operation of the target user for any candidate image, taking the selected candidate image as the target image.

Optionally, the determining a target promotional object provided by a target user comprises:
providing object prompt information of at least one promotional object corresponding to the target user in the user interface; and in response to an object selection operation of the target user, determining the selected target promotional object.

Optionally, the method further comprises:
in response to an adjustment operation for the at least one promotional object, displaying an object list in the user interface; and updating the at least one promotional object according to at least one object selected by the target user from the object list.

Optionally, the method further comprises:
in response to an image selection operation triggered by the target user for any promotional image, saving the selected promotional image into a delivery list of the target object; displaying delivery lists respectively corresponding to at least one promotional object in the user interface; in response to an image selection operation for the delivery list, determining at least one selected target promotional image; and generating a promotion request based on at least one target promotional image respectively corresponding to the at least one promotional object; where the promotion request is used to indicate performing an object promotion operation based on the at least one target promotional image respectively corresponding to the at least one promotional object.

Optionally, the providing selection prompt information of at least one style in the user interface comprises:
providing selection prompt information of at least one style corresponding to the first processing method in the user interface.

Optionally, the method further comprises:
determining at least one processing method matching at least one object image of the target promotional object according to image requirements corresponding to different processing methods; where the at least one object image is provided by the target user.

Optionally, the providing object prompt information of at least one promotional object corresponding to the target user in the user interface comprises:
providing promotion invitation information in the user interface; where the promotion invitation information is sent to a target user who meets a promotion condition; and in response to a confirmation operation for the promotion invitation information, providing object prompt information of at least one promotional object corresponding to the target user in the user interface.

Optionally, the method further comprises:
determining, from a plurality of objects corresponding to the target user, at least one promotional object that meets promotion requirements.

Optionally, the determining, from a plurality of objects corresponding to the target user, at least one promotional object that meets promotion requirements comprises:
screening at least one popular object that meets a first popularity condition according to interaction data generated for objects published by the online system; where the interaction data includes object exposure information, object click information, object sales information, and/or object conversion information; collecting statistic information on at least one popular object feature of the at least one popular object; and selecting at least one promotional object whose matching degree meets matching requirements according to matching degrees of the plurality of objects corresponding to the target user with the at least one popular object feature respectively.

Optionally, the method further comprises:
displaying an invalid mark for a promotional image in an invalid state in the delivery list;

Alternatively, in response to an image selection operation for the delivery list, in a case where a promotional item selected by the target user is in an invalid state, selection failure prompt information is displayed.

Optionally, the method further comprises:
displaying configuration prompt information corresponding to the at least one promotional object on a user interface; and in response to a configuration operation of the target user, determining generated promotion configuration information;
generating a promotion request based on the at least one target promotional image respectively corresponding to the at least one promotional object includes:
generating a promotion request based on the at least one target promotional image respectively corresponding to the at least one promotional object and the promotion configuration information.

Optionally, the method further comprises:
selecting a first popular image satisfying a second popularity condition from at least one object image corresponding to a similar object of the target promotional object; determining a second processing method and a second style corresponding to the first popular image; generating a promotional image conforming to the second style based on object information of the target promotional object according to the second processing method; and saving the promotional image into a delivery list corresponding to the promotional object.

Optionally, the determining at least one promotional image conforming to the first style generated according to the first processing method based on object information of the target promotional object includes:
invoking an image generation model corresponding to the first processing method to generate at least one promotional image conforming to the first style based on object information of the target object.

Optionally, the method further comprises:
providing performance review prompt information on a user interface; and in response to a performance review operation of a target user for any promotional object or any promotion task, displaying corresponding promotion performance information on the user interface.

In a second aspect, an embodiment of the present application provides a content generation method, comprising:
determining a target promotional object provided by a target user;
providing selection prompt information of at least one processing method in a user interface;
in response to a method selection operation of the target user, determining a selected first processing method;
providing selection prompt information of at least one style on the user interface;
in response to a style selection operation of the target user, determining a selected first style;
determining at least one promotional content conforming to the first style generated based on the object information of the target object according to the first processing method;
providing content prompt information of the at least one promotional content on the user interface.

In a third aspect, an embodiment of the present application provides an image generation method, comprising:
determining a target object provided by a target user;
sending selection prompt information of at least one processing method to a user terminal;
determining a first processing method selected by the target user;
sending selection prompt information of at least one style to the user terminal;
determining a first style selected by the target user;
generating at least one promotional image conforming to the first style based on the object information of the target object according to the first processing method.

Optionally, the method further comprises:
sending image prompt information of the at least one promotional image to the user terminal; saving the promotional image into a delivery list corresponding to the target object according to the promotional image selected by the target user; sending delivery lists respectively corresponding to at least one promotional object corresponding to the target user to the user terminal; determining at least one target promotional image respectively selected by the target user for the at least one promotional object; and performing an object promotion operation based on the at least one target promotional image respectively corresponding to the at least one promotional object.

Optionally, the method further comprises:
screening at least one popular object satisfying a first popularity condition according to interaction data generated for objects published by an online system, where the interaction data includes object exposure information, object click information, object sales information, and/or object conversion information; collecting statistic information on at least one popular object feature of the at least one popular object; selecting at least one promotional object whose matching degree satisfies a matching requirement according to matching degrees between a plurality of objects corresponding to the target user and the at least one popular object feature respectively; and sending object prompt information of the at least one promotional object to the user terminal;

The determining the target object provided by the target user includes:
determining the target object selected by the target user.

Optionally, the method further comprises:
selecting a first popular image satisfying a second popularity condition from object images corresponding to a similar object of the target promotional object; obtaining a second processing method and a second style corresponding to the first popular image through analysis; generating a promotional image conforming to the second style based on object information of the target promotional object according to the second processing method; and saving the promotional image into a delivery list corresponding to the promotional object.

Optionally, the generating at least one promotional image conforming to the first style based on object information of the target object according to the first processing method includes:
invoking the image generation model corresponding to the first processing method, and generating at least one promotional image conforming to the first style based on the object information of the target object; the image generation model is obtained by training using a plurality of training samples; the training samples include sample object information and sample images conforming to sample styles.

Optionally, the method further comprises:
performing image review on each of the at least one promotional image; in a case where the image review of any promotional image fails, setting the promotional image to an invalid state.

Optionally, the performing the object promotion operation based on at least one target promotional image respectively corresponding to the at least one promotional object includes:
for any promotional object, selecting a second popular image satisfying a third popularity condition from at least one object image corresponding to a similar object of the promotional object; screening a to-be-promoted image matching the second popular image from at least one target promotional image corresponding to the promotional object; and performing the object promotion operation for the promotional object based on the to-be-promoted image.

Optionally, the method further comprises:
sending configuration prompt information to a user terminal, so that the user terminal displays the configuration prompt information on a user interface, and generating a configuration request in response to a configuration operation of the target user; and receiving the configuration request sent by the user terminal, and determining the generated promotion configuration information;

The performing the object promotion operation based on at least one target promotional image respectively corresponding to the at least one promotional object includes:
performing the object promotion operation based on the at least one target promotional image respectively corresponding to the at least one promotional object and the promotion configuration information.

Optionally, the method further comprises:
sending object prompt information of the at least one promotional object to the user terminal;

The determining the target object provided by the target user includes:
determining the target object selected by the target user.

Optionally, the sending the object prompt information of the at least one promotional object to the user terminal includes:
in a case where the target user satisfies a promotion condition, sending promotion invitation information to the user terminal; and sending the object prompt information of the at least one promotional object to the user terminal according to a confirmation operation of the target user.

Optionally, the method further comprises:
sending an object list corresponding to the target user to the user terminal according to an adjustment request for the at least one promotional object; and updating the at least one promotional object according to at least one object selected by the target user from the object list.

Optionally, the method further comprises:
determining, from a plurality of objects corresponding to the target user, at least one promotional object that meets promotion requirements.

Optionally, the first processing method includes generating text, synthesizing images, switching backgrounds, or skinning.

Optionally, the method further comprises:
collecting statistic information on promotion performance corresponding to a promotion task formed by the at least one promotional object, and promotion performance of any promotional object; sending performance review prompt information to the user terminal; and upon receiving a performance review request for any promotion task or any promotional object from the user terminal, sending the promotion performance information of the promotion task or the promotional object to the user terminal.

Optionally, the method further comprises:
receiving a promotion termination request for any promotion task or any promotional object sent by the user terminal, and pausing the object promotion operation corresponding to the promotion task or the promotional object.

Optionally, the method further comprises:
in a case where it is detected that an update operation occurs on the image generation model, regenerating at least one promotional image conforming to the first style based on the object information of the target object by using the image generation model; and updating at least one historically generated promotional image corresponding to the target object by using the at least one regenerated promotional image.

Optionally, the object information includes a target image, and the method further includes:
screening a target image conforming to the first processing method and the first style from at least one object image corresponding to the target promotional object; the at least one object image is provided by the target user.

Optionally, the method further comprises:
determining at least one processing method matching at least one object image of the target promotional object according to image requirements corresponding to different processing methods; where the at least one object image is provided by the target user.

According to a fourth aspect, an embodiment of the present application provides a content generation method, including:
determining a target object provided by a target user;
sending selection prompt information of at least one processing method to a user terminal;
determining a first processing method selected by the target user;
sending selection prompt information of at least one style to the user terminal;
determining a first style selected by the target user;
generating at least one promotional content conforming to the first style based on the object information of the target object according to the first processing method.

In a fifth aspect, an embodiment of the present application provides a computing device, comprising a processing component and a storage component;
the storage component stores one or more computer instructions; the one or more computer instructions are used to be called and executed by the processing component to implement the image generation method as described in the first aspect above, or the content generation method as described in the second aspect above, or the image generation method as described in the third aspect above, or the content generation method as described in the fourth aspect above.

In a sixth aspect, an embodiment of the present application provides a computer-readable storage medium storing a computer program, where when the computer program is executed by a computer, the image generation method as described in the first aspect above, or the content generation method as described in the second aspect above, or the image generation method as described in the third aspect above, or the content generation method as described in the fourth aspect above is implemented.

In an embodiment of the present application, a target promotional object provided by a user is determined, and selection prompt information for at least one processing method is provided in a user interface; in response to a method selection operation of the target user, a selected first processing method is determined, and selection prompt information for at least one style is provided in the user interface; in response to a style selection operation of the target user, a selected first style is determined; at least one promotional image generated according to the target first processing method and conforming to the first style is determined based on object information of the target promotional object; and image prompt information of the at least one promotional image is displayed in the user interface. The embodiment of the present application implements automatic generation of promotional images through a human-computer interaction method, improving content generation efficiency and reducing content generation costs.

These aspects or other aspects of the present application will become more concise and easy to understand in the description of the following embodiments.

### BRIEF DESCRIPTION OF THE DRAWINGS

To describe the technical solutions in the embodiments of the present application or the prior art more clearly, the drawings required for describing the embodiments or the prior art are briefly introduced below. Obviously, the drawings in the following description are some embodiments of the present application, and for those of ordinary skill in the art, other drawings can also be obtained based on these drawings without creative labor.
FIG. 1 illustrates a flowchart of an embodiment of a content generation method provided by the present application;
FIG. 2 illustrates a flowchart of an embodiment of an image generation method provided by the present application;
FIG. 3a to FIG. 3c respectively illustrate schematic diagrams of user interfaces in a practical application of an embodiment of the present application;
FIG. 4 illustrates a flowchart of another embodiment of a content generation method provided by the present application;
FIG. 5 illustrates a flowchart of another embodiment of an image generation method provided by the present application;
FIG. 6a illustrates a schematic diagram of scene interaction in a practical application of an embodiment of the present application;
FIG. 6b illustrates a system architecture diagram applicable to a technical solution in a practical application of an embodiment of the present application;
FIG. 7 illustrates a schematic structural diagram of an embodiment of a content generation apparatus provided by an embodiment of the present application;
FIG. 8 illustrates a schematic structural diagram of another embodiment of a content generation apparatus provided by an embodiment of the present application;
FIG. 9 illustrates a schematic structural diagram of an embodiment of a computing device provided by an embodiment of the present application.

### DETAILED DESCRIPTION OF EMBODIMENT

To enable those skilled in the art to better understand the solutions of the present application, the technical solutions in the embodiments of the present application will be clearly and completely described below in conjunction with the drawings in the embodiments of the present application.

In some processes described in the specification and claims of the present application and the above drawings, multiple operations appearing in a specific order are included, but it should be clearly understood that these operations may not be performed in the order in which they appear herein or may be performed in parallel. The sequence numbers of the operations, such as 101, 102, etc., are only used to distinguish different operations, and the sequence numbers themselves do not represent any execution order. In addition, these processes may include more or fewer operations, and these operations may be performed sequentially or in parallel. It should be noted that descriptions such as "first" and "second" herein are used to distinguish different messages, devices, modules, etc., and do not represent a sequential order, nor do they limit "first" and "second" to being different types.

The technical solutions of the embodiments of the present application can be applied to an object promotion scenario to efficiently, accurately, and at low cost generate promotional content for a promotional object. The promotional content may include information types such as images, text, audio, and/or video.

An object herein may refer to a virtual object provided in an online manner for a consumer to perform an interaction behavior, and a user herein may refer to an object provider. For example, for a commodity provided by an online trading platform, the commodity may refer to a tangible item or an intangible service, etc., and the consumer may perform interaction behaviors such as browsing, collecting, and purchasing. The object provider means a merchant. To improve a commodity click-through rate, a commodity conversion rate, etc., performing object promotion is a current solution. In practical applications, object promotion may refer to a commodity advertisement. The quality of advertisement content becomes a key factor affecting the commodity click-through rate, the commodity conversion rate, etc. As described in the background art, current advertisement content is usually produced by the merchant themselves, and the production process is complex. Especially for advertisement images, the merchant needs to use many third-party software operations and then upload them to the online trading platform for output through the online trading platform in various advertisement channels, etc. It can be seen that the production cost is high, the efficiency is low, and the accuracy of self-made content cannot be guaranteed, and the effects on the improvement of the commodity click-through rate, the commodity conversion rate, etc., are not obvious.

Therefore, to reduce production costs and improve production efficiency, the inventors proposed the technical solution of the present application after a series of studies. In the embodiments of the present application, through a human-computer interaction method, a user only needs to select a target promotional object to implement automatic generation of promotional images, thereby saving image production efficiency and production costs.

It should be noted that the use of user data may be involved in the embodiments of the present application. In practical applications, user-specific personal data may be used in the solutions described herein within the scope permitted by applicable laws and regulations, provided that the requirements of the applicable laws and regulations of the country where the user is located are met (for example, the user explicitly agrees, the user is effectively notified, etc.).

It should be noted that the technical solutions of the embodiments of the present application are applicable to a network virtual environment. The described user generally refers to a "virtual user." A real user can register a user account in a server through a registration method to obtain a user identity in the network environment. In the embodiments of the present application, the same user account can be used to log in to the server through different types of clients, so that the server can identify the same user. Of course, different user accounts can also be used to log in to the server through different types of clients. The server stores binding relationships between different user accounts, so that different user accounts having a binding relationship can be considered as the same user.

The technical solutions in the embodiments of the present application will be clearly and completely described below in conjunction with the drawings in the embodiments of the present application. Obviously, the described embodiments are only some of the embodiments of the present application, rather than all of the embodiments. Based on the embodiments in the present application, all other embodiments obtained by those skilled in the art without creative labor shall fall within the protection scope of the present application.

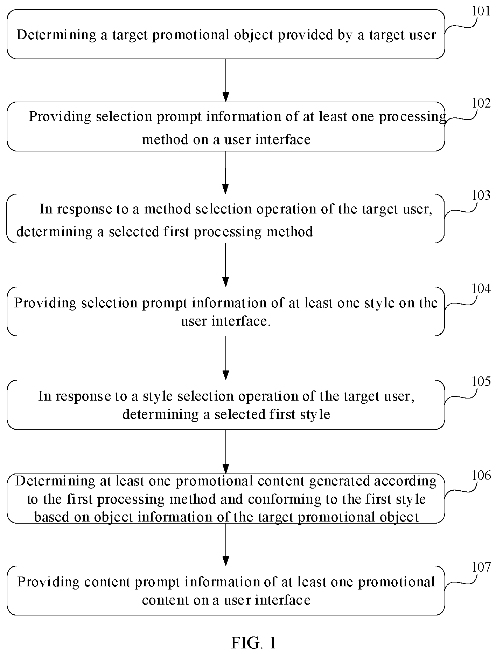

FIG. 1 is a flowchart of an embodiment of a content generation method provided by an embodiment of the present application, and the technical solution of this embodiment may be executed by a user terminal. In a practical application, a system architecture to which an embodiment of the present application may be applied may include a user terminal and a server. The user terminal faces a user, which means an object provider, and the user may request the server to publish an object through the user terminal, and a consumer may perform interaction behaviors such as object searching, browsing, and purchasing through a consumer terminal.

Here, a connection is established between the user terminal and the server through a network. The network provides a medium for a communication link between the user terminal and the server. The network may include various connection types, such as wired or wireless communication links, or fiber optic cables, and the like.

The user terminal may interact with a server 102 through the network to receive or send messages and the like.

Here, the user terminal may be a browser, an APP (Application), or a web application such as an H5 (HyperText Markup Language 5) application, or a light application (also referred to as a mini-program, a lightweight application), or a cloud application, and the like, and the user terminal may be deployed in an electronic device and needs to rely on the device for operation or rely on certain apps in the device for operation, and the like. The electronic device may, for example, have a display screen and support information browsing and the like, and may be, for example, a personal mobile terminal such as a mobile phone, a tablet computer, a personal computer, a desktop computer, a smart speaker, a smart watch, and the like. For ease of understanding, the user terminal is mainly represented by a device image in FIG. 1. Various other types of applications may also be generally configured in the electronic device, such as a human-computer dialogue application, a model training application, a text processing application, a web browser application, a shopping application, a search application, an instant messaging tool, an email client, social platform software, and the like. The electronic device may refer to a device used by a user and having functions such as computing, Internet access, and communication required by the user, and may be, for example, a mobile phone, a tablet computer, a personal computer, a wearable device, and the like. The electronic device may generally include at least one processing component and at least one storage component. The electronic device may also include basic configurations such as a network card chip, an IO bus, and audio and video components, which is not limited in the present application. Optionally, depending on the implementation form of the electronic device, some peripheral devices may also be included, such as a keyboard, a mouse, an input pen, a printer, and the like, which is not limited in the present application.

The server may include servers providing various services, such as a server for processing interaction information sent by the user terminal, and the like.

It should be noted that the server may be implemented as a distributed server cluster composed of multiple servers, or may be implemented as a single server. The server may also be a server of a distributed system, or a server combined with a blockchain. The server may also be a cloud server providing basic cloud computing services such as cloud services, cloud databases, cloud computing, cloud functions, cloud storage, network services, cloud communication, middleware services, domain name services, security services, a Content Delivery Network (CDN), and big data and artificial intelligence platforms, or an intelligent cloud computing server or an intelligent cloud host with artificial intelligence technology.

Here, the content generation method shown in FIG. 1 may include the following steps:
101: determining a target promotional object provided by a target user.

Here, the target user may refer to any user, and optionally, the target user may also refer to any user satisfying a promotion condition. The promotion condition may refer to the existence of a historical promotion record, or, in a practical application, in a case where a user may perform object promotion in a specific object promotion page by participating in a promotion activity of an online system, the promotion condition may be, for example, participating in the promotion activity.

Optionally, the target object provided by the user may be determined according to an object selection operation of the target user.

As an optional method, determining the target promotional object provided by the target user may include: providing object prompt information of at least one promotional object in a user interface; and in response to an object selection operation of the target user, determining the selected target promotional object. The object selection operation may refer to a trigger operation performed for any object prompt information, and the object prompt information may be in the form of a control for the user to perform an operation such as clicking to select the corresponding target promotional object.

The at least one promotional object may be determined from multiple objects corresponding to the target user, and the multiple objects are requested by the target user to be published to the online system. To improve the flexibility of object selection, optionally, the method may further include:
in response to an adjustment operation for the at least one promotional object, displaying an object list in the user interface; the object list may include multiple objects corresponding to the target user; and updating the at least one promotional object according to at least one object selected by the target user from the object list.

The target user may select or deselect an object in the object list to achieve the purpose of updating the at least one promotional object.

As can be seen from the above description, the target user may refer to any user satisfying the promotion condition, and therefore, optionally, providing the object prompt information of the at least one promotional object corresponding to the target user in the user interface may include:
providing promotion invitation information in the user interface; the promotion invitation information may be sent to a target user meeting the promotion condition and used to prompt the target user whether to produce promotional content and the like; and in response to a confirmation operation for the promotion invitation information, providing the object prompt information of the at least one promotional object corresponding to the target user in the user interface.

Optionally, the method may further include: determining at least one promotional object satisfying a promotion requirement from the multiple objects corresponding to the target user.

The promotion requirement may refer to, for example, including a specified object feature and the like, and the specified object feature may be pre-configured, or may be obtained through statistics of object features included in at least one popular object in the online system, and the like. The popular object may refer to an object whose interaction data satisfies a popularity condition, and the interaction data may refer to, for example, object exposure information, object click information, object sales information, and/or object conversion information, and the like. The object exposure information may refer to, for example, an object exposure amount within a specified time; the object click information may refer to, for example, an object click amount within a specified time; the object sales information may refer to, for example, an object sales amount within a specified time; the object conversion amount may refer to, for example, an object conversion rate within a specified time, and the object conversion rate may be calculated, for example, according to a ratio of the object sales amount to the object exposure amount, and the like. A first popularity condition may refer to, for example, the object exposure amount, the object click amount, the object sales amount, and/or the object conversion rate being respectively greater than a certain value, and the like.

In addition, as another optional method, determining the at least one promotional object satisfying the promotion requirement from the multiple objects corresponding to the target user may include:
screening at least one popular object satisfying a first popularity condition according to interaction data generated for objects published by the online system; the interaction data includes object exposure information, object click information, object sales information, and/or an object conversion rate; performing statistics on at least one popular object feature of the at least one popular object; and selecting at least one promotional object whose matching degree satisfies a matching requirement according to matching degrees of the multiple objects corresponding to the target user with the at least one popular object feature respectively.

The at least one popular object feature may include, for example, basic information such as an object category, an object name, an object origin, and image attribute features, and the image attribute features may include, for example, a processing method and/or a style.

That is, for each object, a matching degree of multiple objects can be calculated based on whether each object has the at least one popular object feature, or a deviation from the at least one popular object feature, etc. A specific calculation method may be a pre-set calculation rule or implemented through a machine learning model, which is not specifically limited in this application, so that at least one promotional object can be screened and obtained based on the matching degree. The matching requirement may refer to, for example, the matching degree being greater than a specified value, etc. A larger matching degree may indicate that the object contains more popular object features or is closer to the popular object features.

102: providing selection prompt information of at least one processing method on a user interface.

In the embodiments of the present application, the processing method may include, for example, generating text, synthesizing images, switching backgrounds, skinning, etc.

Optionally, the online system may provide multiple processing methods, and the at least one processing method may be determined from the multiple processing methods. The at least one processing method matching at least one object image of the target promotional object may be determined according to image requirements corresponding to different processing methods. The at least one object image is provided by the target user.

The image requirements may be set according to actual needs. For example, in the processing method of generating text, the image requirement may refer to the target promotional object having an object image containing text information. In the processing method of synthesizing images, the image requirement may refer to the target promotional object having multiple object images; in the processing method of switching backgrounds, the image requirement may refer to the target promotional object having an object image with a solid color background; in the processing method of skin changing, the image requirement may refer to the target promotional object having an object image containing a human body. It should be noted that this is only an example, and the present application is not limited thereto.

103: in response to a method selection operation of the target user, determining a selected first processing method.

104: providing selection prompt information of at least one style on the user interface.

105: in response to a style selection operation of the target user, determining a selected first style.

The method selection operation may be a triggering operation for selection prompt information of any processing method. The selection prompt information may be in the form of a control to sense a user triggering operation, such as a click, etc., so that the processing method selected by the target user can be determined based on the method selection operation. For convenience of description, the processing method selected by the target user is named a first processing method herein. In the embodiments of the present application, each processing method may be configured with one or more styles respectively. For example, the at least one style corresponding to the processing method of generating text may include, for example, a text color such as red, etc., a text position such as the upper right of an image, etc., and a text background shape such as a rectangle, a heart shape, etc.; the at least one style corresponding to the processing method of synthesizing images may include, for example, a layout method such as a top-bottom layout, a left-right layout, and an arrangement quantity such as one row and three columns, etc.; the at least one style corresponding to the processing method of switching backgrounds may include, for example, a beach, a grassland, a sky, etc.; the at least one style corresponding to the processing method of skin changing may include, for example, a skin color such as yellow, white, etc., and a skin type such as Asian, European and American, etc. It should be noted that this is only an example, and the present application is not limited thereto.

As an optional method, for the selection prompt information of at least one style provided on the user interface, the at least one style may refer to all styles corresponding to the at least one processing method. A user may rely on an understanding of each processing method to select a style suitable for the first processing method therefrom. In addition, to avoid the problem of content generation errors caused by a mismatch between the processing method and the style, after providing all styles corresponding to the at least one processing method in the user interface, in response to the style selection operation of the target user, whether a currently selected style matches the first processing method may be determined; if they do not match, error prompt information may be displayed to prompt the target user that the style selection is incorrect, so as to perform selection again or the like; and if they match, the style may serve as the first style. In addition, as other implementations, selection prompt information of each style that does not match the first processing method may also be switched to an unselectable state, such that the target user cannot perform a selection operation or the like; or, selection prompt information of each style that matches the first processing method may also be set with a specific marking symbol to prompt the target user that selection prompt information of a style displaying the specific marking symbol can be used to perform a selection operation or the like.

At this time, selection prompt information for at least one processing method and selection prompt information for at least one style may be simultaneously displayed on the user interface.

In addition, to improve selection efficiency or the like, as yet another optional method, providing the selection prompt information of at least one style in the user interface may be providing selection prompt information of at least one style corresponding to the first processing method on the user interface.

After the first processing method is selected, selection prompt information for at least one style corresponding to the first processing method can be displayed in the user interface. Only the selection prompt information for the at least one style corresponding to the first processing method may be displayed in the user interface, and style selection prompt information corresponding to other processing methods may stop being displayed or be hidden, etc.

In addition, in this optional method, selection prompt information for at least one processing method may be first displayed in the user interface, and after the first processing method is determined, selection prompt information for at least one style corresponding to the first processing method may then be displayed in the user interface.

The style selection operation may refer to a triggering operation for selection prompt information of any style. The selection prompt information may be, for example, in the form of a control to sense a user triggering operation, such as a click, etc., so that the style selected by the target user can be determined based on the style selection operation. For convenience of description, the style selected by the target user is named a first style herein.

In addition, optionally, after the selected first processing method is determined, a selection mark symbol may be displayed at a display position corresponding to the selection prompt information of the first processing method to prompt that the first processing method is selected; after the selected first style is determined, a selection mark symbol may be displayed at a display position corresponding to the selection prompt information of the first style to prompt that the first style is selected, etc.

106: determining at least one promotional content generated according to the first processing method and conforming to the first style based on object information of the target promotional object.

The object information may include, for example, one or more of an object name, an object title, an object image, and key information extracted from an object detail page.

The promotional content may include one or more of a promotional image, promotional text, promotional audio, promotional video, and the like.

The user terminal may send a first processing method and a first style selected by a target user to a server, and the server generates at least one promotional content conforming to the first style according to the first processing method based on object information of a target object, and sends the at least one promotional content to the user terminal.

Certainly, the user terminal may also generate at least one promotional content conforming to the first style according to the first processing method based on the object information of the target object.

In an implementation, at least one promotional content conforming to the first style may be generated based on the object information of the target object by invoking a content generation model corresponding to the first processing method.

In the embodiments of the present application, different processing methods may be implemented using different content generation models, where the content generation model may be obtained by training using multiple training samples, and the training samples may include sample object information and sample images conforming to a sample style, etc.

Optionally, the content generation model may be implemented using an AIGC (Artificial Intelligence Generated Content) model, such as stable diffusion (an open-source AI drawing generation tool), etc. Of course, the present application is not limited thereto.

107: providing content prompt information of at least one promotional content on a user interface.

To facilitate the target user viewing promotional content in order to perform subsequent operations and the like, content prompt information of at least one promotional content may be displayed on a user interface.

The content prompt information may include promotional content or key information extracted from the promotional content, and in a case where the promotional content includes a promotional image, the content prompt information may include a thumbnail of the promotional image and the like.

Based on the content prompt information, the target user may request to view the corresponding promotional content, or request to download the corresponding promotional content to local storage, or request to add the corresponding promotional content to a delivery list, so as to perform a subsequent object promotion operation or the like on the target promotional object in the delivery list.

In this embodiment, through a human-computer interaction method, a user only needs to select a target promotional object to realize automatic generation of a promotional image, thereby improving image production efficiency and saving production costs. Moreover, to improve the accuracy of the promotional content, a content generation model may be utilized to generate the promotional content, which helps to improve content generation efficiency while ensuring content accuracy.

As can be seen from the above description, the promotional content may include one or more of a promotional image, promotional text, promotional audio, promotional video, or the like, and may have multiple information types; for ease of understanding and description, the technical solution of the embodiments of the present application is introduced below in one or more embodiments mainly by taking the promotional content being a promotional image as an example.

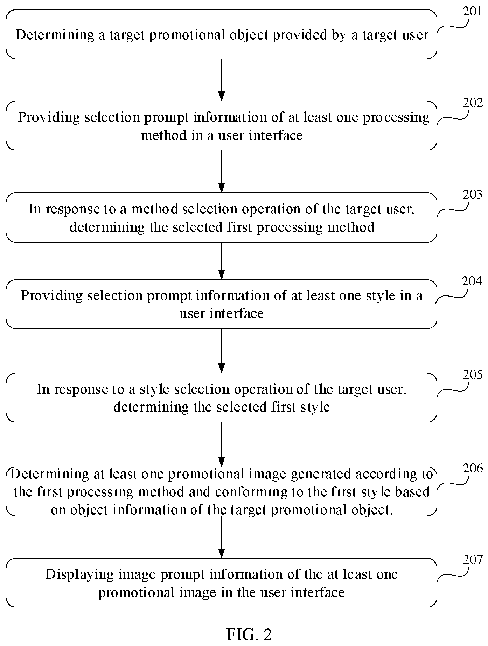

FIG. 2 is a flowchart of an embodiment of an image generation method provided by an embodiment of the present application, and the technical solution of this embodiment is executed by a user terminal, and the method may include the following steps:
201: determining a target promotional object provided by a target user.
202: providing selection prompt information of at least one processing method in a user interface.

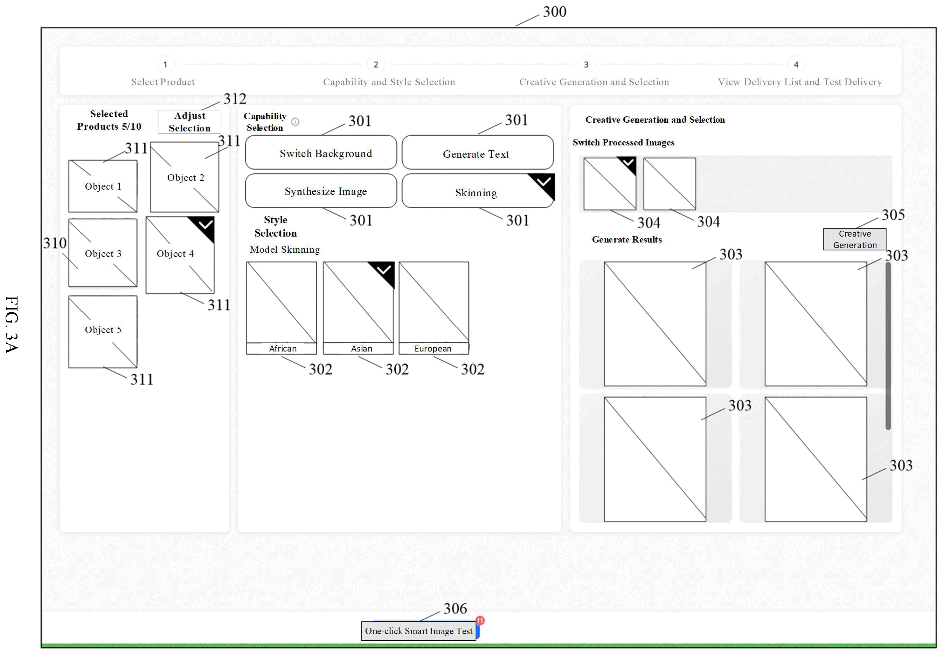

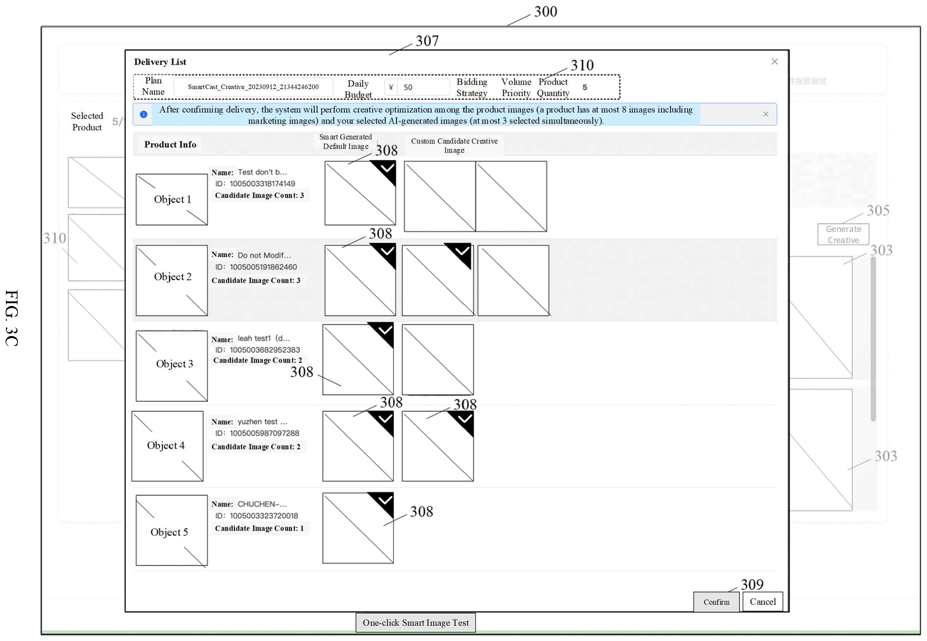

For ease of understanding, as shown in a possible display schematic diagram of a user interface in a practical application illustrated in FIG. 3a, selection prompt information 301 of at least one processing method may be displayed in a user interface 300.

203: in response to a method selection operation of the target user, determining the selected first processing method.

204: providing selection prompt information of at least one style in a user interface.

205: in response to a style selection operation of the target user, determining the selected first style.

As an optional method, for the selection prompt information of at least one style provided in the user interface, the at least one style may refer to all styles corresponding to the at least one processing method. A user may rely on an understanding of each processing method to select a style suitable for the first processing method therefrom. In addition, to avoid the problem of content generation errors caused by a mismatch between the processing method and the style, after providing all styles corresponding to the at least one processing method in the user interface, in response to the style selection operation of the target user, whether a currently selected style matches the first processing method may be determined; if they do not match, error prompt information may be displayed to prompt the target user that the style selection is incorrect, so as to perform selection again or the like; and if they match, the style may serve as the first style. In addition, as other implementations, selection prompt information of each style that does not match the first processing method may also be switched to an unselectable state, such that the target user cannot perform a selection operation or the like; or, selection prompt information of each style that matches the first processing method may also be set with a specific marking symbol to prompt the target user that selection prompt information of a style displaying the specific marking symbol can be used to perform a selection operation or the like.

In addition, to improve selection efficiency or the like, as yet another optional method, providing the selection prompt information of at least one style in the user interface may include providing selection prompt information of at least one style corresponding to the first processing method in the user interface.

As shown in FIG. 3a, the target user may perform a method selection operation on selection prompt information of any processing method, so as to determine the corresponding first processing method, and selection prompt information 302 of at least one style corresponding to the first processing method may be displayed in a user interface 300.

206: determining at least one promotional image generated according to the first processing method and conforming to the first style based on object information of the target promotional object.

207: displaying image prompt information of the at least one promotional image in the user interface.

As shown in FIG. 3a, image prompt information 303 of at least one promotional image may be displayed in the user interface 300.

It should be noted that a difference between this embodiment and the embodiment shown in FIG. 1 is that the promotional content specifically refers to a promotional image, that is, at least one promotional image generated according to the first processing method and conforming to the first style based on the object information of the target promotional object, and then what can be displayed in the user interface is the image prompt information of the at least one promotional image. Other identical or similar steps may be found in the description of the embodiment shown in FIG. 1, and are not repeated here.

In some embodiments, the method may further include: determining at least one processing method matching at least one object image of the target promotional object according to image requirements corresponding to different processing methods; where the at least one object image is provided by the target user.

In some embodiments, the object information may specifically include a target image; the method may further include: screening, from at least one object image corresponding to the target promotional object, a target image that meets an image requirement corresponding to a first processing method; where the at least one object image is provided by the target user.

That is, after the first processing method and the first style are selected, since the target promotional object may have multiple object images, a target image meeting the image requirement may be screened therefrom according to the image requirement corresponding to the first processing method.

In some embodiments, screening, from the at least one object image corresponding to the target promotional object, the target image meeting the first processing method and the first style may include: screening, from the at least one object image corresponding to the target promotional object, at least one candidate image meeting the image requirement corresponding to the first processing method; displaying image prompt information of the at least one candidate image on a user interface; and in response to an image selection operation of the target user for any candidate image, taking the selected candidate image as the target image.

The image prompt information of each candidate image may include, for example, a thumbnail of the candidate image or the like, and may be in the form of a control so as to perceive the image selection operation triggered by the target user.

As shown in FIG. 3a, selection prompt information 304 of at least one candidate image may be displayed in the user interface 300 for the target user to select a target image therefrom.

In addition, as shown in FIG. 3a, generation prompt information 305 may also be displayed in the user interface 300, such that in response to a triggering operation for the generation prompt information 305, at least one promotional image conforming to the first style may be generated according to the first processing method based on the object information of the target promotional object, or a request may be generated to a server so that the server generates at least one promotional image conforming to the first style according to the first processing method based on the object information of the target promotional object.

As can be seen from the above description, based on the image prompt information of any promotional image, the target user may perform an image download operation to download the selected promotional image to local storage; in addition, an image viewing operation may be performed to display the selected promotional image on the user interface; in addition, an image selection operation may be performed to add the selected promotional image to a delivery list corresponding to the target user. Therefore, in some embodiments, the method may further include: in response to an image selection operation of the target user for any promotional image, saving the selected promotional image to a delivery list of the target object.

One or more promotional images or the like respectively corresponding to the target promotional object may be saved in the delivery list.

In some embodiments, the method may further include: displaying delivery lists respectively corresponding to at least one promotional object on the user interface; in response to an image selection operation for the delivery list, determining at least one selected target promotional image; generating a promotion request based on the at least one target promotional image respectively corresponding to the at least one promotional object; where the promotion request is used to indicate performing an object promotion operation based on the at least one target promotional image respectively corresponding to the at least one promotional object.

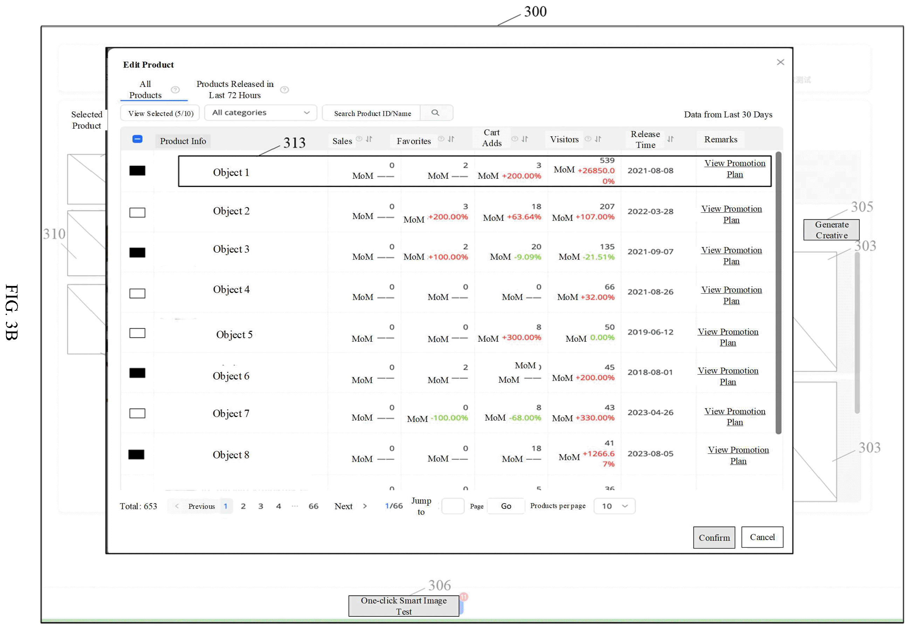

Optionally, as shown in FIG. 3a, list review prompt information 306 may be displayed in the user interface 300, such that in response to a triggering operation based on the list review prompt information 306, as shown in FIG. 3b, a delivery list 307 corresponding to each of at least one object may be displayed in the user interface 300, where the delivery list of each object includes one or more promotional images. The target user may select at least one target promotional image 308 in the delivery list corresponding to any object.

Optionally, as shown in FIG. 3b, promotion prompt information 309 may also be displayed in the user interface 300, such that in response to a triggering operation for the promotion prompt information 309, a promotion request may be generated based on at least one target promotional image corresponding to each of at least one object.

In addition, in some embodiments, the method may further include: displaying configuration prompt information corresponding to at least one object in the user interface, such as configuration prompt information 310 shown in FIG. 3b, such that in response to a configuration operation triggered by the target user for the configuration prompt information, generated promotion configuration information may be determined, and thus a promotion request may be generated based on at least one target promotional image corresponding to each of the at least one object and the promotion configuration information.

The promotion configuration information may include, for example, a promotion task name, a promotion budget cost, a promotion strategy, and the like.

In some embodiments, determining the target promotional object provided by the target user may include: providing object prompt information of at least one promotional object corresponding to the target user on the user interface; and in response to an object selection operation of the target user, determining the selected target promotional object.

In some embodiments, providing the object prompt information of the at least one promotional object corresponding to the target user on the user interface includes: providing promotion invitation information on the user interface, where the promotion invitation information is sent to the target user meeting a promotion condition; and in response to a confirmation operation for the promotion invitation information, providing the object prompt information of the at least one promotional object corresponding to the target user on the user interface.

In some embodiments, the method may further include: in response to an adjustment operation for at least one promotional object, displaying an object list on the user interface; and updating the at least one promotional object according to at least one object selected by the target user from the object list.

Optionally, as shown in FIG. 3a, object prompt information 311 of at least one object may be displayed in the user interface 300, and in addition, adjustment prompt information 312 may also be displayed, where the adjustment operation may be a triggering operation for the adjustment prompt information.

As shown in FIG. 3b, an object list may be displayed in the user interface 300, where the object list may include object prompt information 313 of a plurality of objects corresponding to the target user, and the target user may perform an object selection operation in the object list, so as to update at least one object based on at least one reselected object.

Here, a promotion task may be generated based on the at least one object.

In some embodiments, the method may further include: selecting, from at least one object image corresponding to a similar object of the target promotional object, a first popular image satisfying a second popularity condition; determining a second processing method and a second style corresponding to the first popular image; generating a promotional image meeting the second style based on object information of the target promotional object according to the second processing method; and saving the promotional image to a delivery list corresponding to the promotional object.

Optionally, the promotional image meeting the second style may be generated based on the object information of the target promotional object by invoking an image generation model corresponding to the second processing method.

The image generation model may be implemented using an AIGC model, such as stable diffusion or the like; of course, the present application is not limited thereto, and other model structures may also be used for implementation, such as a GAN (Generative Adversarial Nets) or the like.

The second popularity condition may refer to, for example, an image click volume and/or an image exposure volume or the like being respectively greater than a certain value or the like.

Here, the similar object of the target promotional object may refer to, for example, an object having at least part of object features identical to those of the target promotional object, or a similarity score between the target promotional object and any object may be calculated based on the object features, so as to screen an object with a similarity score greater than a specified score as the similar object or the like.

The promotional image may also be automatically generated and added to the delivery list according to the second processing method and the second style that the first popular image conforms to.

Here, determining the second processing method and the second style corresponding to the first popular image may be implemented, for example, through an image recognition technology, such as by using a pre-trained image recognition model or the like, which is not limited in the present application.

In addition, in some embodiments, the method may further include: providing performance review prompt information respectively corresponding to at least one promotional object or a promotion task composed of at least one promotional object on the user interface; and in response to a performance review operation of the target user for any promotional object or any promotion task, displaying corresponding promotion performance prompt information on the user interface.

The promotion performance prompt information corresponding to each promotional object may include, for example, a promotion cost, an object conversion rate, an object exposure volume, an object click volume, or the like.

The promotion performance prompt information corresponding to each promotion task may include, for example, a total promotion cost, a total object exposure volume, a total object click volume, a total object conversion rate, or the like corresponding to at least one promotional object under the promotion task.

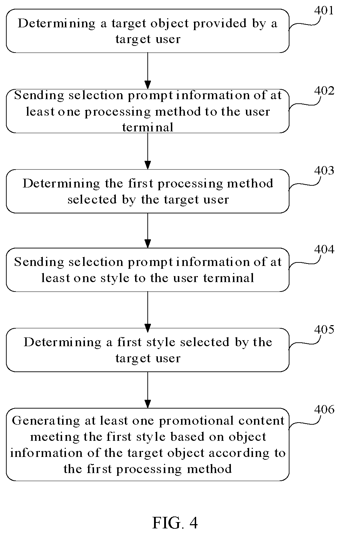

FIG. 4 is a flowchart of yet another embodiment of a content generation method provided by an embodiment of the present application, where the technical solution of this embodiment may be executed by a server, and the method may include the following steps:
401: determining a target object provided by a target user.

Here, a user terminal may send the target object provided by the target user to the server.

Optionally, object prompt information of at least one object may be sent to the user terminal, so as to facilitate the user terminal to display the object prompt information of the at least one object in the user interface and perceive an object selection operation of the target user.

Determining the target object provided by the target user is determining the target object selected by the target user.

Here, the method may further include: sending object prompt information of at least one object to the user terminal; the user terminal may display the object prompt information of the at least one object in the user interface, and may perceive an object selection operation triggered for any object prompt information, so as to send an object selection request to the server. The server may determine the target object selected by the target user according to the object selection request.

Optionally, the method may further include: sending an object list corresponding to the target user to the user terminal according to an adjustment request for at least one object; and updating the at least one object according to at least one object selected by the target user from the object list.

In addition, optionally, sending the object prompt information of the at least one object to the user terminal may include: sending promotion invitation information to the user terminal if the target user satisfies a promotion condition; and sending the object prompt information of the at least one object to the user terminal according to a confirmation operation of the target user.

The at least one object may be determined from a plurality of objects corresponding to the target user, and may be randomly selected; in addition, optionally, at least one object satisfying a promotion requirement may be determined from the plurality of objects corresponding to the target user.

As an implementation, determining the at least one object satisfying the promotion requirement from the plurality of objects corresponding to the target user includes:
screening at least one popular object satisfying a first popularity condition according to interaction data generated for objects published by an online system, where the interaction data includes object exposure information, object click information, object sales information, and/or object conversion information; collecting statistic information on at least one popular object feature of the at least one popular object; and selecting at least one object whose matching degree satisfies a matching requirement according to matching degrees of a plurality of objects corresponding to the target user with the at least one popular object feature respectively.

402: sending selection prompt information of at least one processing method to the user terminal.

The at least one processing method may be determined by pre-configuration; in addition, optionally, the server may provide a plurality of processing methods, and at least one processing method matching at least one object image of the target promotional object may be determined according to image requirements corresponding to different processing methods.

403: determining the first processing method selected by the target user.

The user terminal may determine the selected first processing method in response to a method selection operation, and send the first processing method to the server.

404: sending selection prompt information of at least one style to the user terminal.

Optionally, selection prompt information of at least one style corresponding to at least one processing method may be sent to a user terminal, for the user terminal to display the selection prompt information of the at least one style corresponding to the at least one processing method on the user interface. The selection prompt information of the at least one processing method and the selection prompt information of the at least one style may be sent to the user terminal simultaneously, so that the user terminal can simultaneously display the selection prompt information of the at least one processing method and the selection prompt information of the at least one style on the user interface; of course, the selection prompt information of the at least one style may also be sent after the first processing method is determined, which is not limited in the present application, and the technical solution of the present application is not limited to the sequence of operation steps listed in this embodiment.

In addition, as another optional method, in order to improve style selection efficiency, selection prompt information of at least one style corresponding to the first processing method may be sent to the user terminal. That is, the selection prompt information of the at least one style corresponding to the first processing method is sent to the user terminal, and after the first processing method is determined, the selection prompt information of the at least one style corresponding to the first processing method may be sent to the user terminal again.

405: determining a first style selected by the target user.

The user terminal may determine the selected first style in response to a style selection operation, and send the first style to a server.

406: generating at least one promotional content meeting the first style based on object information of the target object according to the first processing method.

Optionally, the object information may include a target image, the target promotional object corresponds to at least one object image, and the target image may be determined from the at least one object image; optionally, the target image meeting the first processing method and the first style may be screened from the at least one object image corresponding to the target promotional object.

In this embodiment, through a human-computer interaction method, a user only needs to select a target promotional object to realize automatic generation of a promotional image, thereby improving image production efficiency and saving production costs. Moreover, to improve the accuracy of the promotional content, a content generation model may be utilized to generate the promotional content, which helps to improve content generation efficiency while ensuring content accuracy.

As can be seen from the above description, the promotional content may include one or more of a promotional image, promotional text, promotional audio, promotional video, or the like, and may have multiple information types; for ease of understanding and description, the technical solution of the embodiments of the present application is introduced below in one or more embodiments mainly by taking the promotional content being a promotional image as an example.

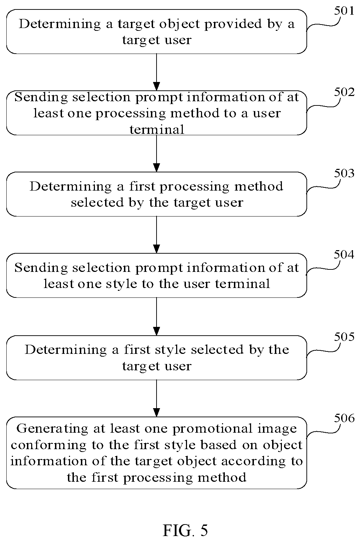

FIG. 5 is a flowchart of yet another embodiment of an image generation method provided by an embodiment of the present application; the technical solution of this embodiment may be executed by a server side, and the method may include the following steps:
501: determining a target object provided by a target user;
502: sending selection prompt information of at least one processing method to a user terminal;
503: determining a first processing method selected by the target user;
504: sending selection prompt information of at least one style to the user terminal;

Optionally, after the first processing method is determined, the selection prompt information of at least one style corresponding to the first processing method may be sent to the user terminal.
505: determining a first style selected by the target user;
506: generating at least one promotional image conforming to the first style based on object information of the target object according to the first processing method.

It should be noted that the difference between this embodiment and the embodiment shown in FIG. 4 is that the promotional content specifically refers to a promotional image, that is, at least one promotional image conforming to the first style generated based on object information of the target promotional object according to the first processing method, and then what can be displayed in the user interface is image prompt information of the at least one promotional image. Other identical or similar steps can be found in the description of the embodiment shown in FIG. 1, and are not repeated here.

In some embodiments, the method may further include: sending image prompt information of at least one promotion image to a user terminal, so that the user terminal can display the image prompt information of the at least one promotion image in a user interface, can sense an image selection operation triggered by a target user for any promotion image, and can send an image selection request to a server based on the selected promotion image, so that the server determines the promotion image selected by the target user; saving the promotion image to a delivery list corresponding to a target promotion object according to the promotion image selected by the target user, where at least one promotion image corresponding to the target promotion object can be saved in the delivery list; sending delivery lists respectively corresponding to at least one promotion object corresponding to the target user to the user terminal, so that the user terminal displays the delivery list corresponding to each promotion object at the user terminal, and can determine at least one selected target promotion image based on an image selection operation of the target user for the delivery list of each promotion object; determining the at least one target promotion image respectively selected by the target user for the at least one promotion object; and performing an object promotion operation based on the at least one target promotion image respectively corresponding to the at least one promotion object.

In this case, the object promotion operation may be performed based on the at least one target promotional image respectively corresponding to the at least one promotional object when a promotion request sent by the user terminal is received. The promotion request may be generated by the user terminal based on the at least one target promotional image respectively corresponding to the at least one promotional object.

In some embodiments, the method may include: performing image auditing on each of the at least one promotional image; setting a promotional image to an invalid state when auditing of any promotional image fails; where image auditing may be performed on each of the at least one promotional image according to an auditing rule to determine whether any promotional image satisfies the auditing rule, and the auditing rule may be, for example, not including prohibited content.

For a promotional image in an invalid state, an invalid mark may be displayed for the promotional image in the invalid state in the delivery list, so that the user terminal, in response to an image selection operation for the delivery list, can display selection failure prompt information when the promotional image selected by the target user is in the invalid state.

In addition, optionally, for a promotional image in an invalid state, an invalid mark may be displayed for the promotional image in the invalid state in the user interface. Thus, the user terminal, in response to an image selection operation triggered by any promotional image, can display selection failure prompt information when the promotional image is in the invalid state.

In some embodiments, performing the object promotion operation based on the at least one target promotional image respectively corresponding to the at least one promotional object may include: for any promotional object, selecting a second popular image satisfying a third popularity condition from at least one object image corresponding to a similar object of the promotional object; filtering a promotional image to be promoted that matches the second popular image from at least one target promotional image corresponding to the promotional object; and performing the object promotion operation for the promotional object based on the promotional image to be promoted.

The object promotion operation may be, for example, generating promotion prompt information based on the promotional image to be promoted, so as to send the promotion prompt information to a designated consumer, or display the promotion prompt information on a specific object promotion page.

The third popularity condition may be, for example, that an image click volume and/or an image exposure volume are respectively greater than a certain value.

The similar object of the promotional object may refer to, for example, an object having at least some object features identical to those of the promotional object, or a similarity score between the promotional object and any object may be calculated based on object features, so that an object with a similarity score greater than a specified score can be filtered as the similar object of the promotional object.

In some embodiments, the method may include: sending configuration prompt information to the user terminal for the user terminal to display the configuration prompt information in the user interface, and generating a configuration request in response to a configuration operation of the target user; receiving the configuration request sent by the user terminal to determine generated promotion configuration information; where performing the object promotion operation based on the at least one target promotional image respectively corresponding to the at least one promotional object includes: performing the object promotion operation based on the at least one target promotional image respectively corresponding to the at least one promotional object and the promotion configuration information.

In some embodiments, the method may further include: selecting a first popular image satisfying a second popularity condition from object images corresponding to similar objects of the target promotional object; analyzing to obtain a second processing method and a second style corresponding to the first popular image; generating a promotional image conforming to the second style based on object information of the target promotional object according to the second processing method; and saving the promotional image to a delivery list corresponding to the promotional object.

In some embodiments, generating at least one promotional image conforming to the first style based on object information of the target object according to the first processing method may include: invoking an image generation model corresponding to the first processing method to generate the at least one promotional image conforming to the first style based on the object information of the target object.

The image generation model may be obtained by training using a plurality of training samples; the training samples include sample object information and sample images conforming to a sample style.

The first processing method includes, for example, generating text, synthesizing images, switching backgrounds, or skinning, which is not specifically limited in the present application.

Here, the first processing method is generating text, generating at least one promotional image conforming to the first style based on the object information of the target object according to the first processing method may include: generating at least one target text based on the object information of the target object; and fusing the at least one target text with a target image of the target object respectively according to the first style to obtain at least one promotional image. The first style may include a text position, and thus the fusion method may superimpose the target text onto the target image according to the text position.

In this case, the at least one target text may be generated based on the object information of the target object by using a text generation model.

Here, the first processing method is synthesizing images, switching backgrounds, or skinning, specifically, the image generation model corresponding to the first processing method may be invoked to generate the at least one promotional image conforming to the first style based on the object information of the target object.

The image generation model may be continuously and iteratively updated, and when an update operation occurs for the image generation model may be reused to regenerate at least one promotional image conforming to the first style based on the object information of the target object, and the regenerated at least one promotional image may be used to update at least one historically generated promotional image corresponding to the target object.

The image generation model may be updated periodically, and thus whether an update operation occurs for the image generation model may be determined based on an update cycle.

In some embodiments, the method may further include: receiving a request sent by the user terminal for any promotion task to pause the promotion task; and receiving a promotion termination request sent by the user terminal for any promotional object to pause the object promotion operation corresponding to the promotional object.

In addition, in some embodiments, if a promotion deletion request sent by the user terminal for any promotion task or any promotional object is received, the promotion task or the promotional object may be deleted.

In some embodiments, the method may further include: collecting statistic information on promotion performance corresponding to a promotion task composed of at least one promotional object, and promotion performance of any promotional object; sending performance review prompt information to the user terminal for the user terminal to display the performance review prompt information in the user interface; and upon receiving a performance review request from the user terminal for any promotion task or any promotional object, sending promotion performance information of the promotion task or the promotional object to the user terminal. The performance review request is generated and sent by the user terminal based on a review operation triggered by the target user for the performance review prompt information.

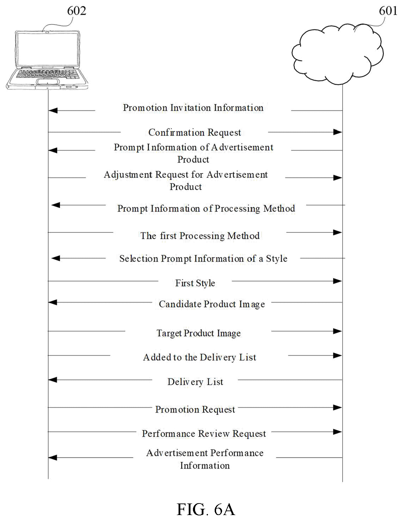

In a practical application, the promotional object in the embodiments of the present application refers to an advertisement object, and the promotional image may be an advertisement image; in an online transaction scenario, the promotional object may specifically refer to an advertisement product or the like; the technical solution of the embodiments of the present application is introduced below by taking the promotional object as an advertisement product and the promotional image as an advertisement image based on the scenario interaction schematic diagram shown in FIG. 6a.

The server side 601 may send promotion invitation information to a corresponding user terminal 602 for a target merchant satisfying a promotion condition, to prompt the user whether automatic generation of advertisement images or the like is required. The user terminal 602 may respond to a confirmation operation of the target merchant for the promotion invitation information, so as to send a confirmation request to the server side 601; based on the confirmation request, the server side 601 may determine at least one advertisement product satisfying advertisement requirements from a plurality of products corresponding to the target merchant.

The server side 601 may send product prompt information of at least one advertisement product to the user terminal 602; the user terminal 602 may display the product prompt information of each advertisement product in the user interface.

In addition, the user terminal 602 may also respond to an adjustment operation of the target merchant on the at least one advertisement product to send an adjustment request to the server side 601; the server side 601 may send a product list including a plurality of products of the target merchant to the user terminal 602 for the user terminal 602 to display the product list, and the target merchant may re-adjust the at least one advertisement product in the product list.

The user terminal 602 may determine a selected target advertisement product according to a product selection operation of the target user for the at least one advertisement product.

The server side 601 may determine at least one processing method matching at least one product image of the target advertisement product according to image requirements corresponding to different processing methods, so as to send selection prompt information of the at least one processing method to the user terminal 602.

The user terminal 602 may respond to a method selection operation of the target merchant to determine a selected first processing method; the server side 601 may send selection prompt information of at least one style corresponding to the first processing method to the user terminal 602; the user terminal 602 may respond to a style selection operation of the target merchant to determine a selected first style.

The server side 601 may screen at least one candidate image conforming to the image requirements corresponding to the first processing method according to the first processing method and the first style, and may send image prompt information of the at least one candidate image back to the user terminal 602; the user terminal 602 may take any one candidate image as a target image according to an image selection operation of the target user for the candidate image.

The server side 601 may generate at least one advertisement image conforming to the first style based on the target image of the target advertisement product according to the first processing method, and send image prompt information of the at least one advertisement image to the user terminal 602.

Meanwhile, the server side 601 may perform image auditing on the at least one advertisement image to determine whether each advertisement image is invalid or the like, and in a case where auditing of any advertisement image fails, set the advertisement image to an invalid state.

The target merchant may select one or more promotional images through the user terminal 602 to request to be added to a delivery list corresponding to the target advertisement product, and may request to view the delivery list.

The server side 601 may send delivery lists respectively corresponding to the at least one advertisement product to the user terminal 602, for the user terminal to display the delivery lists respectively corresponding to the at least one advertisement product.

A target merchant may select at least one target advertisement image in a delivery list of each advertisement product through a user terminal 602. The at least one advertisement product constitutes a promotion task, and the target merchant may also perform promotion configuration through the user terminal 602 to set a promotion task name, a budget cost, and the like.

The user terminal 602 may send an advertisement request to a server 601 for the promotion task, and the server 601 may screen a to-be-processed advertisement image from at least one target advertisement image corresponding to any advertisement product, and specifically perform a corresponding promotion operation based on the to-be-processed advertisement image and the promotion configuration information, for example, generating advertisement information based on the to-be-processed advertisement image, and sending the advertisement information to a designated user or displaying the advertisement information on a specific object promotion page.

The server 601 may also collect advertisement performance information of each promotion task and each advertisement product, and the user terminal 602 may display performance review prompt information, so that the server 601 may send corresponding advertisement performance information to the user terminal 602 according to a performance review request for any promotion task or any promotional object, for the target merchant to review to determine whether to delete or suspend the promotion task or the advertisement product.

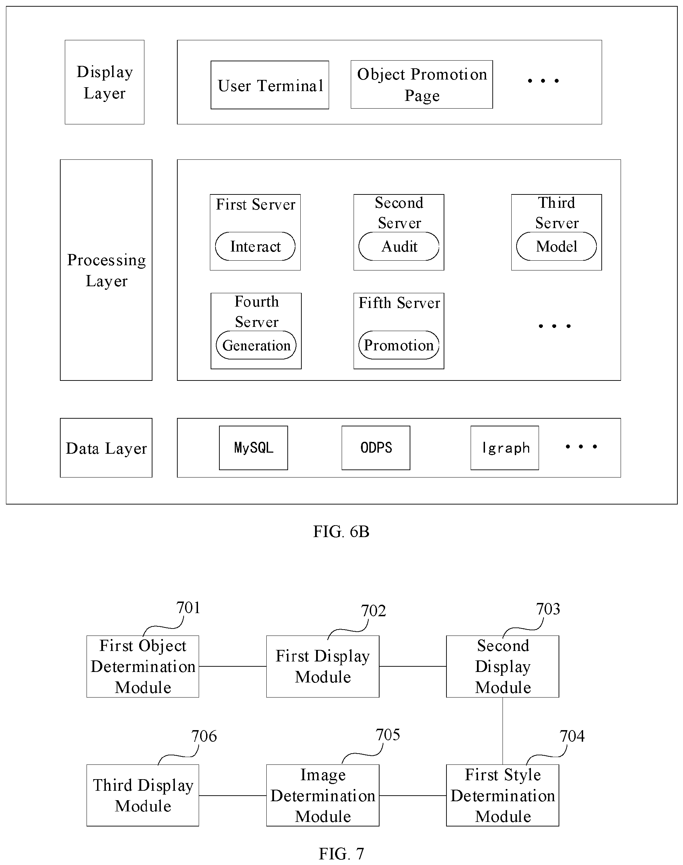

In a practical application, the server side may include one or more servers for providing different services, such as a first server interacting with the user terminal, a second server for image auditing, a third server providing a model, and the like; in addition, various information acquisition and storage during the execution process of the server side 601 may involve multiple databases, such as a database providing processing method and style queries, a database providing product information queries, a database providing storage of advertisement images, target advertisement images, candidate advertisement images, the first processing method, the first style, and the like. In combination with the system architecture diagram shown in FIG. 6b, the overall system architecture may be divided into three layers: a data layer, a processing layer, and a display layer; the data layer includes various databases providing data query or storage, such as MySQL (a relational database management system), ODPS (Open Data Processing Service), Igraph (an online graph storage and query system), and the like; the capability layer includes servers providing different services, such as the first server interacting with the user terminal, the third server providing a model, the second server for image auditing, a fourth server for advertisement image generation, a fifth server for performing product promotion operations, and the like.

The display layer may include a user terminal, an object promotion page, and the like.

In addition, the server side may further include a detection server for detecting whether advertisement image generation fails, whether processing method or style acquisition fails, whether product information acquisition fails, whether a promotion operation fails, whether advertisement image auditing fails, and the like, so as to execute a corresponding failure strategy in different failure cases, such as notifying the user terminal of failure prompt information.

It should be noted that FIG. 6b is only an example, and the present application is not limited thereto.

FIG. 7 is a structural schematic diagram of an embodiment of a content generation device provided by an embodiment of the present application, and the device may include:
a first object determination module 701, configured to determine a target promotional object provided by a target user;
a first display module 702, configured to provide selection prompt information of at least one processing method in a user interface;
a second display module 703, configured to determine a selected first processing method in response to a method selection operation of the target user, and provide selection prompt information of at least one style in the user interface;
a first style determination module 704, configured to determine a selected first style in response to a style selection operation of the target user;
an image determination module 705, configured to determine at least one promotional content conforming to the first style generated based on object information of the target promotional object according to the first processing method;
a third display module 706, configured to provide content prompt information of the at least one promotional content in the user interface.

In some embodiments, the second display module may specifically provide selection prompt information of at least one style corresponding to the first processing method in the user interface.

In some embodiments, in a practical application, the image determination module may specifically determine at least one promotional image conforming to the first style generated based on the object information of the target promotional object according to the first processing method;
then the third display module may specifically provide image prompt information of the at least one promotional image in the user interface.

In some embodiments, the object information includes a target image, and the apparatus may further include:
a first processing module configured to filter at least one candidate image satisfying an image requirement corresponding to the first processing method from at least one object image corresponding to the target promotional object;
a fourth display module configured to display image prompt information of the at least one candidate image in the user interface, and use a selected candidate image as the target image in response to an image selection operation of the target user for any candidate image.

In some embodiments, the object determination module is specifically configured to provide object prompt information of at least one promotional object corresponding to the target user in the user interface, and determine a selected target promotional object in response to an object selection operation of the target user.

In some embodiments, the apparatus may further include:
an object update module configured to display an object list in the user interface in response to an adjustment operation for the at least one promotional object, and update the at least one promotional object according to at least one object selected by the target user from the object list.

In some embodiments, the apparatus may further include:
a promotion request module configured to save a selected promotional image to a delivery list of the target object in response to an image selection operation triggered by the target user for any promotional image; display delivery lists respectively corresponding to at least one promotional object in the user interface; determine at least one selected target promotional image in response to an image selection operation for the delivery list; and generate a promotion request based on the at least one target promotional image respectively corresponding to the at least one promotional object; where the promotion request is used to indicate performing an object promotion operation based on the at least one target promotional image respectively corresponding to the at least one promotional object.

The content generation device described in FIG. 7 can execute the content generation method described in the embodiment shown in FIG. 1, and its implementation principle and technical effects are not repeated here. Specific manners in which each module and unit in the content generation device in the above embodiments perform operations have been described in detail in the embodiments related to the method, and will not be described in detail here.

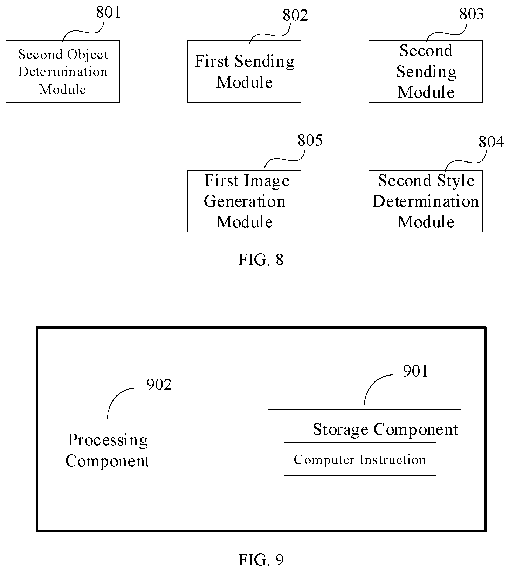

FIG. 8 is a structural schematic diagram of yet another embodiment of a content generation device provided by an embodiment of the present application, and the device may include:
a second object determination module 801, configured to determine a target object provided by a target user;
a first sending module 802, configured to send selection prompt information of at least one processing method to a user terminal, and determine the first processing method selected by the target user;
a second sending module 803, configured to send selection prompt information of at least one style to the user terminal;
a second style determination module 804, configured to determine the first style selected by the target user;
a first image generation module 805, configured to generate, according to the first processing method and based on object information of the target object, at least one promotional image conforming to the first style.
In some embodiments, the second sending module may be sending selection prompt information of at least one style corresponding to the first processing method to the user terminal.

In some embodiments, the apparatus may further include:
an object promotion module, configured to send image prompt information of the at least one promotional image to the user terminal; save the promotional image into a delivery list corresponding to the target object according to the promotional image selected by the target user; send delivery lists respectively corresponding to at least one promotional object corresponding to the target user to the user terminal; determine at least one target promotional image respectively selected by the target user for the at least one promotional object; and perform an object promotion operation based on the at least one target promotional image respectively corresponding to the at least one promotional object.

In some embodiments, the apparatus may further include:
a method determination module, configured to determine at least one processing method matching at least one object image of the target promotional object according to image requirements corresponding to different processing methods; where the at least one object image is provided by the target user.

In some embodiments, the apparatus may further include:
a third sending module, configured to screen at least one popular object satisfying a first popularity condition based on interaction data generated for objects published by an online system; the interaction data includes object exposure information, object click information, object sales information, and/or object conversion information; and collect statistic information on at least one popular object feature of the at least one popular object;
select at least one promotional object whose matching degree satisfies a matching requirement according to matching degrees between a plurality of objects corresponding to the target user and the at least one popular object feature, respectively; and send object prompt information of the at least one promotional object to the user terminal;

The second object determination module may specifically be configured to determine a target object selected by the target user.

In some embodiments, the apparatus may further include:
a second image generation module, configured to select a first popular image satisfying a second popularity condition from object images corresponding to similar objects of the target promotional object; analyze and obtain a second processing method and a second style corresponding to the first popular image; generate a promotional image conforming to the second style based on object information of the target promotional object according to the second processing method; and save the promotional image into a delivery list corresponding to the promotional object.

In some embodiments, the first image generation module may specifically be configured to invoke an image generation model corresponding to the first processing method to generate at least one promotional image conforming to the first style based on object information of the target object;
the image generation model is obtained by training using a plurality of training samples; wherein the training samples comprise sample object information and sample images conforming to a sample style.

The content generation apparatus illustrated in FIG. 8 can perform the content generation method described in the embodiment shown in FIG. 8, and implementation principles and technical effects thereof are not repeated here. Specific manners in which the various modules and units in the content generation apparatus in the above embodiment perform operations have been described in detail in the embodiments related to the method, and will not be elaborated here.

An embodiment of the present application further provides a computing device, as shown in FIG. 9, where the computing device may include a storage component 901 and a processing component 902;
the storage component 901 stores one or more computer instructions, where the one or more computer instructions are called and executed by the processing component 902 to implement the content generation method described in the embodiment shown in FIG. 1, or the image generation method described in the embodiment shown in FIG. 2, or the content generation method described in the embodiment shown in FIG. 4, or the image generation method described in the embodiment shown in FIG. 5.

Certainly, the computing device may necessarily further include other components, such as an input/output interface, a display component, a communication component, and the like.

In a case where the processing component in the computing device is used to implement the content generation method described in the embodiment shown in FIG. 1 or the image generation method described in the embodiment shown in FIG. 2, the computing device may further include a display component to perform a corresponding display operation.

The input/output interface provides an interface between the processing component and a peripheral interface module, and the peripheral interface module may be an output device, an input device, or the like. The communication component is configured to facilitate communication in a wired or wireless manner between the computing device and other devices.

The processing component may include one or more processors to execute computer instructions to complete all or part of the steps in the above methods. Certainly, the processing component may also be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the above methods. The storage component is configured to store various types of data to support operations at a terminal. The storage component may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk. The display component may be an electroluminescent (EL) element, a liquid crystal display, or a micro-display having a similar structure, or a retinal direct display or a similar laser scanning display.

It should be noted that, in a case where the above computing device implements the content generation method described in the embodiment shown in FIG. 1 or the image generation method described in the embodiment shown in FIG. 2, it may be specifically implemented as an electronic device, and the electronic device may refer to a device used by a user and having functions required by the user such as computing, Internet access, and communication, for example, a mobile phone, a tablet computer, a personal computer, a wearable device, or the like.

In a case where the above computing device implements the content generation method described in the embodiment shown in FIG. 4 or the image generation method described in the embodiment shown in FIG. 5, it may be implemented as a physical device or an elastic computing host provided by a cloud computing platform, or the like. It may be implemented as a distributed cluster composed of a plurality of servers or terminal devices, or may be implemented as a single server or a single terminal device.

An embodiment of the present application further provides a computer-readable storage medium storing a computer program, where when the computer program is executed by a computer, the content generation method described in the embodiment shown in FIG. 1, or the image generation method described in the embodiment shown in FIG. 2, or the content generation method described in the embodiment shown in FIG. 4, or the image generation method described in the embodiment shown in FIG. 5 can be implemented. The computer-readable medium may be included in the electronic device described in the above embodiments; or may exist independently without being assembled into the electronic device.

An embodiment of the present application further provides a computer program product, including a computer program carried on a computer-readable storage medium, where when the computer program is executed by a computer, the content generation method described in the embodiment shown in FIG. 1, or the image generation method described in the embodiment shown in FIG. 2, or the content generation method described in the embodiment shown in FIG. 4, or the image generation method described in the embodiment shown in FIG. 5 can be implemented. In such an embodiment, the computer program may be downloaded and installed from a network, and/or installed from a removable medium. When the computer program is executed by a processor, various functions defined in the system of the present application are performed.

Those skilled in the art can clearly understand that, for convenience and brevity of description, for specific working processes of the system, device, and unit described above, reference may be made to corresponding processes in the foregoing method embodiments, which are not repeated here.

The device embodiments described above are merely illustrative, where the units described as separate components may or may not be physically separate, and the components displayed as units may or may not be physical units, that is, they may be located in one place or may be distributed over a plurality of network units. Some or all of the modules may be selected according to actual needs to achieve the objectives of the solutions of the embodiments. Those of ordinary skill in the art can understand and implement the solutions without creative labor.

Through the description of the foregoing implementations, those skilled in the art can clearly understand that each implementation can be implemented by means of software plus a necessary general-purpose hardware platform, and certainly can also be implemented through hardware. Based on such understanding, the technical solutions above essentially, or the part contributing to the prior art, may be embodied in the form of a software product, and the computer software product may be stored in a computer-readable storage medium, such as ROM/RAM, a magnetic disk, an optical disc, etc., including several instructions for causing a computing device (which may be a personal computer, a server, or a network device, etc.) to perform the methods described in various embodiments or some parts of the embodiments.

Finally, it should be noted that the above embodiments are only used to illustrate the technical solutions of the present application, rather than to limit them; although the present application has been described in detail with reference to the foregoing embodiments, those of ordinary skill in the art should understand that they can still modify the technical solutions recorded in the foregoing embodiments, or perform equivalent replacements for some of the technical features therein; and these modifications or replacements do not make the essence of the corresponding technical solutions depart from the spirit and scope of the technical solutions of the embodiments of the present application.

## Claims

1. An image generation method, **characterized in that** it comprises:
determining a target promotional object provided by a target user;
providing selection prompt information of at least one processing method in a user interface;
in response to a method selection operation of the target user, determining a selected first processing method;
providing selection prompt information of at least one style in the user interface;
in response to a style selection operation of the target user, determining a selected first style;
determining at least one promotional image generated according to the first processing method and conforming to the first style based on object information of the target promotional object;
providing image prompt information of the at least one promotional image in the user interface.

2. The method according to claim 1, wherein the object information comprises a target image, and the method further comprises:
screening, from at least one object image corresponding to the target promotional object, at least one candidate image meeting an image requirement corresponding to the first processing method;
displaying image prompt information of the at least one candidate image on the user interface;
in response to an image selection operation of the target user for any candidate image, using a selected candidate image as the target image.

3. The method according to claim 1, wherein the determining a target promotional object provided by a target user comprises:
providing object prompt information of at least one promotional object corresponding to the target user on the user interface;
in response to an object selection operation of the target user, determining the selected target promotional object.

4. The method according to claim 3, further comprising:
in response to an adjustment operation for the at least one promotional object, displaying an object list on the user interface;
updating the at least one promotional object according to at least one object selected by the target user from the object list.

5. The method according to claim 1, further comprising:
in response to an image selection operation triggered by the target user for any promotional image, saving the selected promotional image into a delivery list of the target object;
displaying delivery lists respectively corresponding to at least one promotional object on the user interface;
in response to an image selection operation for the delivery list, determining at least one selected target promotional image;
generating a promotion request based on at least one target promotional image respectively corresponding to the at least one promotional object; wherein, the promotion request is used for indicating to perform an object promotion operation based on the at least one target promotional image respectively corresponding to the at least one promotional object.

6. The method according to claim 1, wherein the providing selection prompt information of at least one style on the user interface comprises:
providing selection prompt information of at least one style corresponding to the first processing method in the user interface.

7. A content generation method, comprising:
determining a target promotional object provided by a target user;
providing selection prompt information of at least one processing method in a user interface;
in response to a method selection operation of the target user, determining a selected first processing method;
providing selection prompt information of at least one style on the user interface;
in response to a style selection operation of the target user, determining a selected first style;
determining at least one promotional content conforming to the first style generated according to the first processing method based on the object information of the target object;
providing content prompt information of the at least one promotional content on the user interface.

8. An image generation method, comprising:
determining a target object provided by a target user;
sending selection prompt information of at least one processing method to a user terminal;
determining a first processing method selected by the target user;
sending selection prompt information of at least one style to the user terminal;
determining a first style selected by the target user;
generating at least one promotional image conforming to the first style based on the object information of the target object according to the first processing method.

9. The method according to claim 8, further comprising:
sending image prompt information of the at least one promotional image to the user terminal;
saving the promotional image in a delivery list corresponding to the target object according to the promotional image selected by the target user;
sending delivery lists respectively corresponding to the at least one promotional object corresponding to the target user to the user terminal;
determining at least one target promotional image respectively selected by the target user for the at least one promotional object;
performing an object promotion operation based on the at least one target promotional image respectively corresponding to the at least one promotional object.

10. The method of claim 8, **characterized in that** it further comprises:
screening at least one popular object satisfying a first popularity condition based on interaction data generated for objects published by an online system; wherein the interaction data comprises object exposure information, object click information, object sales information, and/or object conversion information;
obtaining statistical information on at least one popular object feature of the at least one popular object;
selecting at least one promotional object whose matching degree satisfies a matching requirement according to the matching degree between each of a plurality of objects corresponding to the target user and the at least one popular object feature;
sending object prompt information of the selected at least one promotional object to the user terminal;
the determining the target object provided by the target user includes:
determining the target object selected by the target user.

11. The method of claim 9, **characterized in that** it further comprises:
selecting a first popular image satisfying a second popularity condition from object images corresponding to similar objects of the target promotional object;
analyzing to obtain a second processing method and a second style corresponding to the first popular image;
generating a promotional image conforming to the second style based on object information of the target promotional object according to the second processing method;
saving the promotional image into a delivery list corresponding to the promotional object.

12. The method of claim 8, **characterized in that** the generating at least one promotional image conforming to the first style based on object information of the target object according to the first processing method comprises:
invoking an image generation model corresponding to the first processing method to generate at least one promotional image conforming to the first style based on the object information of the target object;
wherein the image generation model is obtained by training using a plurality of training samples; wherein the training samples comprise sample object information and sample images conforming to a sample style.

13. A content generation method, **characterized in that** it comprises:
determining a target object provided by a target user;
sending selection prompt information of at least one processing method to a user terminal;
determining a first processing method selected by the target user;
sending selection prompt information of at least one style to the user terminal;
determining a first style selected by the target user;
generating at least one promotional content conforming to the first style based on the object information of the target object according to the first processing method.

14. A computing device, **characterized in that** it comprises a processing component and a storage component;
wherein: the storage component stores one or more computer instructions; the one or more computer instructions are used to be invoked and executed by the processing component to implement the image generation method according to any one of claims 1 to 6, or the content generation method according to claim 7, or the image generation method according to any one of claims 8 to 12, or the content generation method according to claim 13.

15. A computer-readable storage medium, **characterized in that** a computer program is stored thereon, and when the computer program is executed by a computer, the image generation method according to any one of claims 1 to 6, or the content generation method according to claim 7, or the image generation method according to any one of claims 8 to 12, or the content generation method according to claim 13 is implemented.
